# EUROPEAN PATENT SPECIFICATION

(11) **EP 4 013 538 B1**
(45) Date of publication and mention of the grant of the patent: **30.10.2024**
(21) Application number: 20767590.1
(22) Date of filing: 04.08.2020
(51) Int. Cl.: B01F 23/2361, B01F 23/451, B01F 35/71

(54) **APPARATUS AND METHOD FOR THE PREPARATION OF AERATED DRINKS**
VORRICHTUNG UND VERFAHREN ZUR HERSTELLUNG VON KOHLENSÄUREHALTIGEN GETRÄNKEN
APPAREIL ET PROCÉDÉ DE PRÉPARATION DE BOISSONS GAZEUSES

(30) Priority: 15.08.2019 GB 201911710; 02.06.2020 GB 202008267
(43) Date of publication of application: 22.06.2022
(73) Proprietor: Sodaflo Limited, Peterborough, Cambridgeshire PE6 9HS (GB)
(72) Inventor: ALDRED, Ian Alexander, Cambridgeshire PE6 9HS (GB); SCOTT, Alistair John, Cambridgeshire PE6 9HS (GB); GRAY, Christopher Michael, Cambridgeshire PE6 9HS (GB); PEARSON, Allen John, Cambridgeshire PE6 9HS (GB); O CONNELL, Daniel, Cambridgeshire PE6 9HS (GB)
(74) Representative: Abraham, Richard
(86) International application number: PCT/GB2020/051864
(87) International publication number: WO 2021/028654

(56) References cited:
- US-A- 1 925 466
- US-A- 3 628 444
- US-A- 5 954 233
- US-A1- 2008 245 314
- US-A1- 2013 089 645
- US-A1- 2018 029 774

## Description

The present invention relates to apparatus for the preparation of aerated drinks, particularly but not exclusively to apparatus for preparing carbonated drinks, and to a corresponding method.

Domestic carbonator devices are well known in the art and are based around the provision of an aerator stage comprising: a removable aerator bottle defining a chamber for receiving a liquid to be carbonated; an aerator bottle interface operative to engage the removable aerator bottle and seal the chamber thereof; a gas inlet line operative to fluidly connect a gas cylinder containing pressurised CO₂ gas to the aerator bottle interface, the gas inlet line typically terminating in a gas inlet nozzle supported by the aerator bottle interface and configured to extend into the chamber of the aerator bottle when the aerator bottle engages the aerator bottle interface; and a gas supply mechanism (including either a manually actuated mechanical valve or an electrically controlled solenoid valve) for controlling supply of pressurised CO₂ gas from the gas cylinder to the aerator bottle via the gas inlet line.

In use, a liquid (typically water) is added to the chamber of the removable aerator bottle and the removable aerator bottle is connected in a sealed manner to the aerator bottle interface. Once the removable aerator bottle is sealed in position, the gas supply mechanism is activated (either manually or electronically depending upon the type of device) to transfer CO₂ from the gas cylinder to the liquid in the chamber of the sealed removable aerator bottle, thereby carbonating the liquid. Depending upon the desired level of carbonation, the gas supply mechanism may be activated one or more times to transfer the desired quantity of CO₂ to the liquid. Once carbonated to the desired level, the removable aerator bottle is removed from the device by a user and the carbonated liquid may be consumed. If the carbonated liquid is intended to be flavoured, a flavouring (typically in the form of a flavouring syrup) may be added to the carbonated liquid in the removable aerator bottle after the removable aerator bottle has been removed from the device.

US2013/089645A1 discloses an apparatus according to the preamble of claim 1, and a method according to the preamble of claim 11.

The present applicant has identified a desire for an improved aerator device that offers greater flexibility than prior art domestic carbonator devices whilst providing enhanced functionality with minimal additional complexity.

In accordance with a first aspect of the present invention, there is provided apparatus for the preparation of aerated (e.g. carbonated) drinks according to claim 1.

In this way a domestic (e.g. portable) device is provided that allows preparation (e.g. one drink at a time) of aerated drinks and provides the user with the option of serving the aerated drink from the removable aerator bottle (as per a conventional domestic carbonator) or via the aerated liquid dispenser outlet. For the purposes of the present specification, the term "aerated" and its equivalents are used herein to refer generally to the addition of any gas to a liquid. The term "carbonated" and its equivalents are used herein to refer to the addition of CO₂ gas to a liquid.

In one embodiment, the apparatus is configured to transfer aerated liquid from the removable aerator bottle to the aerated liquid dispenser outlet using gas pressure in the sealed chamber (e.g. gas pressure developed in the head of the chamber during the aeration process).

In one embodiment, the liquid flow controller comprises a valve (e.g. solenoid valve).

In one embodiment, the liquid flow controller further comprises a flow regulator operative to maintain a substantially constant flow rate (e.g. substantially constant volumetric flow rate) of aerated liquid from the liquid dispenser outlet as aerated liquid is discharged from the removable aerator bottle to the aerated liquid dispenser outlet.

In one embodiment, the liquid outlet line comprises a dip tube having an opening for receiving aerated liquid positioned at a lower (lowermost) part of the chamber when the removable aerator bottle is engaged by the aerator bottle interface. In one embodiment, the dip tube is supported by the aerator bottle interface.

According to the invention, the apparatus further comprises a flavouring liquid dispenser (e.g. flavouring syrup dispenser) comprising a flavouring liquid dispenser outlet.

In on embodiment, the flavouring liquid dispenser outlet is positioned adjacent the aerated liquid dispenser outlet (e.g. to allow both flavouring liquid and aerated liquid to be dispensed simultaneously into a receptacle, e.g. a drinking glass).

In one embodiment, the flavouring liquid dispenser outlet and aerated liquid dispenser outlet are configured (e.g. positioned) to perform in-air mixing of the flavouring liquid and aerated liquid. In one embodiment, the flavouring liquid dispenser outlet and aerated liquid dispenser outlet are configured to perform in-air mixing outside of the apparatus (e.g. inside of a receptacle placed beneath the adjacent flavouring liquid dispenser outlet and aerated liquid dispenser outlets).

According to the invention, the flavour dispenser mechanism is activated by gas pressure from the removable aerator bottle (e.g. gas pressure developed in the head of the chamber during the aeration process). In this way, a flavouring liquid dispenser may be provided that is operated using gas pressure that would be discarded in a conventional domestic carbonator device.

In one embodiment, the apparatus further comprises a gas outlet line for supplying gas from the aerator stage to the flavouring liquid dispenser.

In one embodiment, the gas outlet line is operative to supply gas from the removable aerator bottle (e.g. headspace of the removable aerator bottle) to the flavouring liquid dispenser. In one embodiment, the gas outlet line includes a gas outlet provided in the aerator bottle interface.

In one embodiment, the apparatus further comprises a gas outlet valve for controlling discharge of gas from the aerator stage (e.g. from the removable aerator bottle) to the flavour dispenser mechanism via the gas outlet line.

In one embodiment, the apparatus further comprises an exhaust valve operable to release gas pressure in the chamber.

In one embodiment, the exhaust valve is fluidly coupled to the gas outlet line (e.g. at a point between the gas outlet in the aerator bottle interface and the gas outlet valve).

In one embodiment, the flavouring liquid dispenser is configured to dispense flavouring liquid from a flavour capsule (e.g. single-use/single-serving flavour capsule) received in the flavouring liquid dispenser.

In one embodiment, the flavour dispenser mechanism is operative to perform one or more of the following functions: open (e.g. rupture) a flavour capsule received in the flavouring liquid dispenser; drive the flavouring liquid out from the opened flavour capsule towards the flavouring dispenser outlet.

In one embodiment, the flavour dispenser mechanism comprises a capsule opening mechanism (e.g. piston) operative to apply a dispensing force to a flavour capsule received in the flavouring liquid dispenser (e.g. to urge the flavour capsule against an opening (e.g. rupturing) member and/or to drive the flavouring liquid out from the opened flavour capsule (e.g. by collapsing the flavour capsule).

In one embodiment, the capsule opening mechanism is driven by (e.g. directly by) gas pressure from the aerator stage (e.g. from the removable aerator bottle).

In one embodiment, the apparatus further comprises a controller (e.g. electronic controller) for operating one or more of the gas supply mechanism; the liquid flow controller mechanism; the gas outlet valve; the exhaust valve.

In the case of apparatus comprising a controller operative to control operation of the gas supply mechanism, the flavour capsule may comprise a machine-readable identifier (e.g. barcode). In one embodiment, the apparatus is operative to read the machine-readable identifier (e.g. using a sensor) and electronic controller is operative to select a degree of aeration required based on the machine-readable identifier.

In one embodiment, the gas supply mechanism comprises a gas supply valve operative to selectively permit gas to flow from the gas supply.

In one embodiment, the gas supply mechanism comprises a pivotable valve actuation member configured to operate the gas supply valve. In one embodiment, the pivotable valve actuation member is driven by a solenoid (e.g. electronically controlled solenoid).

In one embodiment, the aerator bottle interface comprises a gas inlet nozzle forming part of the gas inlet line, the gas inlet nozzle being configured to extend inside the chamber of the removable aerator bottle when the removable aerator bottle is engaged by the aerator bottle interface.

In one embodiment, the volume of the removable aerator bottle is no greater than substantially 2 litres (e.g. no greater than substantially 1.5 litres, (e.g. no greater than substantially 1 litre, no greater than substantially 0.5 litres).

In one embodiment, the removable aerator bottle comprises a base and an open top.

In one embodiment, the aerator bottle interface is configured to seal the open top of the removable aerator bottle.

In accordance with a second aspect of the present invention, there is provided a method of preparing an aerated liquid according to claim 11.

In one embodiment, the step of transferring aerated liquid from the chamber of the removable aerator bottle to the receptacle is achieved substantially using gas pressure developed in a head of the chamber during the aeration step to discharge aerated liquid from the chamber of the removable aerator bottle.

According to the invention, the method comprises dispensing a flavouring liquid from a flavouring liquid dispenser into the receptacle.

In one embodiment, the flavouring liquid dispenser has a flavouring liquid dispenser outlet positioned adjacent the aerated liquid dispenser outlet.

In one embodiment, the method further comprises substantially simultaneously dispensing flavouring liquid and aerated liquid into the receptacle (e.g. to achieve in-air mixing of the flavouring liquid and aerated liquid).

In one embodiment, the step of dispensing a flavouring liquid from the flavouring liquid dispenser comprises inserting a flavour capsule into the flavouring liquid dispenser and the pressurised gas supplied to the flavouring liquid dispenser drives a capsule opening mechanism to apply a dispensing force to the flavour capsule received in the flavouring liquid dispenser (e.g. to urge the flavour capsule against an opening (e.g. rupturing) member and/or to drive the flavouring liquid out from the opened flavour capsule (e.g. by collapsing the flavour capsule).

In one embodiment, the aerating device is a device as defined in accordance with any embodiment of the first aspect of the invention.

A flavour capsule for an aerator device, wherein the capsule as such, or any of its embodiments as such, are not part of the present invention, is disclosed, comprising: a sealed collapsible container (e.g. flexible bag or concertina-type container) containing a flavouring fluid (e.g. (e.g. dry or liquid flavouring fluid); a cap mounted on a leading end of the collapsible container, the cap defining an outlet (e.g. central outlet) for dispensing the flavouring fluid; and at least one piercing element; wherein, in use, relative movement between the collapsible container and the cap (e.g. between a leading end of the collapsible container and the cap) causes the at least one piercing element to rupture the collapsible container, whereby the flavouring fluid is permitted to flow from the collapsible bag to the outlet.

In one embodiment, the flavouring fluid is a flavouring liquid (e.g. flavouring syrup or flavouring gel).

In one embodiment, the at least one piercing element is provided on the cap.

In one embodiment, the at least one piercing element extends circumferentially around the outlet.

In one embodiment the at least one piercing element comprises a plurality of (e.g. circumferentially spaced around the outlet) elements.

In another embodiment, the at least one piercing element comprises a substantially annular cutting edge (e.g. enclosing the outlet).

In one embodiment, the collapsible container is configured to be urged against the at least one piercing element (e.g. by a piston of a flavouring dispenser).

In one embodiment, the leading end of the collapsible container comprises a burstable membrane portion facing the at least one piercing element.

In one embodiment, the leading end of the collapsible container is received by the cap.

In one embodiment, the leading end of the collapsible container is slidably received in the cap (e.g. with the leading end being trapped inside the cap but slidable between first and second trapped positions relative to the cap).

In one embodiment, the collapsible container comprises a flexible pouch part defining a chamber for receiving a flavouring fluid.

In one embodiment, the flexible pouch part defines an opening to the chamber at the leading end of the flexible pouch part.

In one embodiment, the opening is sealed by a burstable membrane portion.

A capsule (e.g. capsule for an aerator device), wherein the capsule as such, or any of its embodiments as such, are not part of the present invention, is disclosed, comprising: a (e.g. substantially rigid-walled) container defining a chamber containing a fluid to be dispensed (e.g. dry or liquid fluid); and a plunger sealing the chamber of the container, the plunger being movable relative to the container between a first position and a second position; wherein the container and the plunger have interengageable parts comprising a frangible seal portion and a puncturing element (e.g. internal puncturing element), the frangible seal portion being configured to form, when punctured by the puncturing element, at least one aperture in the container for dispensing the fluid from the chamber; wherein, in use, relative movement of the plunger relative to the container from the first position to the second position causes the puncturing element to puncture the frangible seal portion to form the at least one aperture.

In one embodiment, the interengageable parts are configured to from the at least one aperture with a predetermined aperture profile. In this way, a flavour capsule may be provided that is operative to from a controlled flow path for dispensing the fluid (e.g. at a predetermined rate).

In one embodiment, the fluid to be dispensed is a dry fluid (e.g. powder).

In another embodiment, the fluid to be dispensed is a liquid (e.g. syrup or gel).

In one embodiment, the dispensing capsule is a flavour dispensing capsule and the fluid is a flavouring fluid (e.g. flavouring powder or flavouring liquid (e.g. flavouring syrup or flavouring gel)).

In one embodiment, movement of the plunger relative to the container from the first position to the second position occurs in an advancement direction and the plunger is further movable in the advancement direction between the second position and a third position relative to the container, wherein movement of the plunger relative to the container from the second position to the third position reduces the volume of the chamber bounded by the container and the plunger, and urges the fluid to flow out of the chamber and through the at least one aperture.

In one embodiment, in the first position an air space is provided in the chamber above the fluid, the air space being configured to allow relative movement from the first position to the second position substantially without compression of the fluid.

In one embodiment, as the plunger moves from the second position to the third position, the volume of the chamber bounded by the container and the plunger is reduced to substantially zero.

In one embodiment, the plunger is slidably mounted within the chamber (e.g. with a trailing end of the plunger being trapped inside the chamber but slidable between the first and second/third positions).

In one embodiment, the container comprises a proximal (e.g. upper) end and a distal (e.g. lower) end.

In one embodiment, the chamber defines an opening at the proximal end for receiving the plunger.

In one embodiment, the chamber comprises a peripheral chamber wall extending between the frangible seal portion and the opening (e.g. between the base of the container and the opening).

In one embodiment, the plunger comprises a head portion comprising a peripheral sealing surface configured to seal against an inner surface (e.g. inner peripheral surface) of the peripheral chamber wall.

In one embodiment, the peripheral sealing surface of the head portion is configured to seal against the inner surface of the peripheral chamber wall by virtue of deformation of the peripheral chamber wall.

In one embodiment, the inner surface of the peripheral chamber wall is tapered (e.g. has a cross-sectional area that decreases with increased distance from the opening).

In one embodiment, the peripheral sealing surface of the head portion comprises one or more sealing elements (e.g. resilient sealing rings) operative to seal against the inner surface of the peripheral chamber wall.

In one embodiment, the puncturing element comprises an elongate shaft (e.g. central shaft). In the first position, the elongate shaft may substantially extend through a full height of the fluid to a point adjacent the frangible seal portion.

In one embodiment, the puncturing element is provided on the plunger and the frangible seal portion is provided on the container. However, in another embodiment the puncturing element may be provided on the container and the frangible seal portion is provided on the plunger.

In the case that the frangible seal portion is provided on the container, in one embodiment the frangible seal portion is provided on a base of the container (e.g. a central location on the base of the container).

In one embodiment, the base of the container has an inner face with a sloped profile operative to direct the fluid towards the frangible seal portion.

In one embodiment, the plunger has a trailing inner face with a corresponding sloped profile to the inner face of the base of the container, whereby in the third position the trailing inner face of the plunger substantially engages the inner face of the base of the container.

In the case that the puncturing element is provided on the plunger, in one embodiment the puncturing element extends from the head portion of the plunger towards the frangible seal portion.

In one embodiment, the puncturing element comprises: a leading aperture forming part (e.g. aperture forming tip or spike); and a trailing aperture engaging part (e.g. aperture engaging shaft).

In one embodiment, the trailing aperture engaging part of the puncturing element and the frangible seal portion comprise first and second cross-sectional forms configured such that, when the trailing aperture engaging part is engaged in the aperture formed by the leading aperture forming part rupturing the frangible seal portion, the first and second cross-sectional forms combine to create at least one flow gap around the trailing aperture engaging part.

In one embodiment, the first and second cross-sectional forms combine to create a predetermined configuration of *n* flow gaps around the trailing aperture engaging part that together form an outlet for the fluid to flow through.

In one embodiment, the *n* flow gaps are circumferentially spaced (e.g. substantially equally circumferentially spaced) relative to a central axis of the frangible seal portion.

In one embodiment, the first cross-sectional form is a substantially circular form.

In one embodiment, in the second cross-sectional form is an *n*-sided polygonal form. However, any combination of first and second cross-sectional forms (e.g. combination of differently-shaped first and second cross-sectional forms) that results in the formation of *n* (e.g. predictably-sized) flow gaps may be suitable to achieve the desired technical effect.

In one embodiment, the first cross-sectional form (e.g. substantially circular from) has a cross-sectional area A₁ and the second cross-sectional form (e.g. *n*-sided polygonal from) has a cross-sectional area A₂. In one embodiment, A₂ > A₁.

In one embodiment, the trailing aperture engaging part of the puncturing element comprises the first cross-sectional form and the frangible seal portion comprises the second cross-sectional form. However, in another embodiment the frangible seal portion may comprise the first cross-sectional form and the trailing aperture engaging part of the puncturing element may comprise the second cross-sectional form. In another embodiment, each of the trailing aperture engaging part of the puncturing element and the frangible seal portion define parts of the first and second cross-sectional forms (e.g. half of one form and half of the other).

In one embodiment, the frangible seal portion defines a displaceable flap profile comprising a plurality of circumferentially spaced lines of weakness extending radially from a central axis (e.g. central outlet axis) and dividing the frangible seal portion into a plurality of displaceable flap portions.

In one embodiment, the displaceable flap profile comprises a plurality of circumferentially spaced radially extending displaceable flaps each extending from the central axis to a respective end region (e.g. with each neighbouring pair of flaps being separated by a line of weakness extending from the central axis and terminating at an end region).

In one embodiment, each of the plurality of displaceable flaps are formed by a bendable thin wall section (e.g. bendable thin wall section of plastics material).

In one embodiment, each of the plurality of lines of weakness are formed by a rupturable thin wall section (e.g. rupturable thin wall section of plastics material).

In one embodiment, each of the plurality of displaceable flaps has reinforced edges extending along the lines of weakness (e.g. to encourage the flaps to maintain their shape as the lines of weakness are broken by the puncturing action of the puncturing element).

In one embodiment, each displaceable flap has a reinforced hinge edge (e.g. formed by a reinforced region of material adjacent a notional hinge edge of the displaceable flap).

In one embodiment, the plurality of lines of weakness are substantially equally circumferentially spaced relative to the central axis.

In one embodiment, the plurality of lines of weakness of substantially equal radial length relative to the central axis.

In one embodiment, the plurality of displaceable flaps are substantially triangular flaps.

In the case that the frangible seal portion comprises the second cross-sectional form, in one embodiment the displaceable flap profile is an *n*-sided polygonal displaceable flap profile.

In one embodiment, the *n*-sided polygonal displaceable flap profile comprises a plurality of *n* lines of weakness extending from the central axis and together define a plurality of *n* displaceable flaps (e.g. *n* substantially triangular displaceable flaps).

In one embodiment, *n* ≥ 3 (e.g. *n* ≥ 4, e.g. *n* ≥ 5, e.g. *n* ≥ 6).

In one embodiment, the first and second cross-sectional forms are configured such that when the *n* displaceable flaps are forced into an open position as the trailing aperture engaging part of the puncturing element fully engages the aperture formed by the leading aperture forming part, a plurality of *n* flow gaps are formed around the trailing aperture engaging part (one flow gap at each apex of the n-sided polygonal outer form).

In one embodiment, the capsule further comprises an outlet nozzle (e.g. substantially cylindrical outlet nozzle) provided downstream of the frangible seal portion (e.g. on an underside of the base of the container in the case that the frangible seal portion is provided on the container base) and operative to receive fluid from the at least one aperture.

In one embodiment, in the third position, a leading part of the puncturing element (e.g. leading part of the trailing aperture engaging part) extends substantially along a full length of the outlet nozzle to create a central fluid guide element.

In one embodiment, in the third position, the leading part of the puncturing element (e.g. tip of the puncturing element or a leading part of the trailing aperture engaging part) protrudes beyond an outlet opening of the outlet nozzle.

In one embodiment, the puncturing element is configured to direct fluid along an outer surface thereof and towards the tip of the puncturing element.

In one embodiment, the puncturing element is configured to direct multiple parallel fluid flows towards the tip and to recombine the fluid flows into one stream of fluid as the fluid leaves the tip.

In another embodiment, the puncturing element is configured to dispense multiple jets of fluid flow from the tip (e.g. by maintaining multiple parallel flows in parallel).

In one embodiment, the puncturing element is configured to be urged against the frangible seal portion by a force applied to an outer (upper or lower) surface of the plunger and/or an outer (upper or lower) surface of the container (e.g. by a (e.g. CO₂ driven) piston of a flavouring dispenser).

In one embodiment, the aerating device is a device as defined in accordance with any embodiment of the first aspect of the invention.

Embodiments of the present invention will now be described by way of example with reference to the accompanying drawings in which:
Figure 1 is a schematic view of an aerator device in accordance with an embodiment of the present invention;
Figure 2 is a schematic system view of the aerator device of Figure 1;
Figure 3 is a schematic view of part of the aerator device of Figure 1;
Figure 4 is a schematic cross-sectional view of a flavouring capsule in accordance with a first embodiment of the present invention for use in the aerator device of Figure 1;
Figures 5A-5C are a schematic cross-sectional views of the flavouring capsule of Figure 4 illustrating its operation;
Figure 6 is a schematic cross-sectional view of a flavouring capsule for use in the aerator device of Figure 1;
Figures 7A-5C are a schematic cross-sectional views of the flavouring capsule of Figure 6 illustrating its operation;
Figure 8A is an exploded perspective view of the flavouring capsule of Figure 6;
Figure 8B is an exploded side view of the flavouring capsule of Figure 6;
Figures 9A-9F are schematic perspective views of the flavouring capsule of Figure 6 illustrating its operation;
Figure 10 is a schematic perspective view of the flavouring capsule of Figure 6 showing details of the pierceable base portion; and
Figures 11A-11D are schematic detailed views of the pierceable base portion of the flavouring capsule of Figure 6 illustrating its operation.

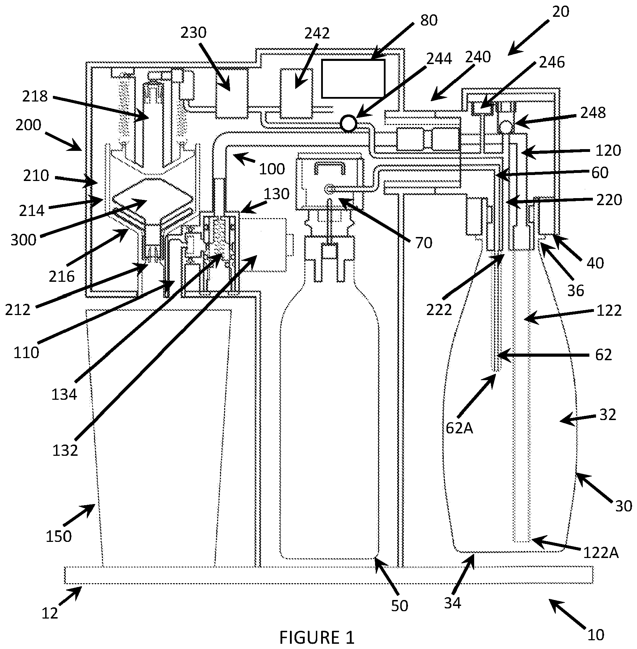

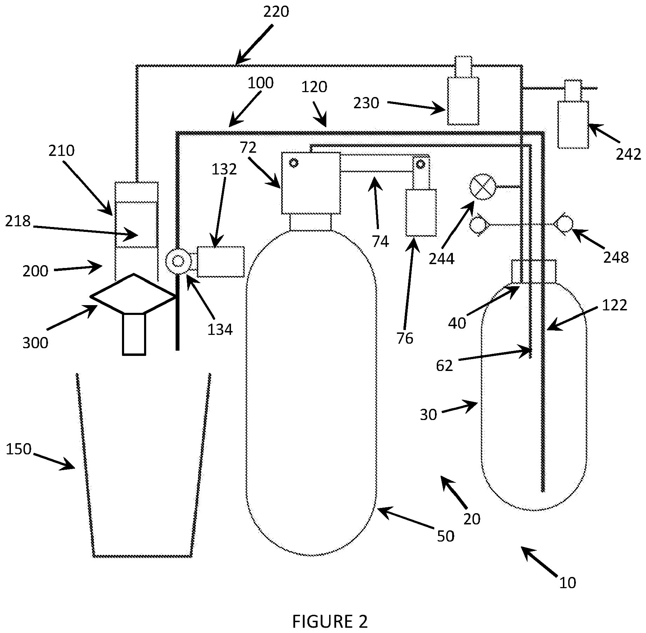

Figures 1 and 2 show a portable domestic aerator device 10 for preparing aerated drinks, comprising a housing 12 and an aerator stage 20 comprising: a removable 450 ml aerator bottle 30 defining a chamber 32 for receiving a liquid (typically water) to be aerated; an aerator bottle interface 40 operative to engage the removable aerator bottle 30 and seal chamber 32; a replaceable gas cylinder 50 containing pressurised CO₂ gas; a gas inlet line 60 operative to fluidly connect gas cylinder 50 to aerator bottle interface 40; and a gas supply mechanism 70 for controlling supply of gas from gas cylinder 50 to the aerator bottle interface 40 via gas inlet line 60.

Removable aerator bottle 30 comprises a base 34 and a tapered open top 36. Aerator bottle interface 40 is pivotable to enable attachment and removal of the removable aerator bottle 30 along an axis inclined to vertical and is configured to seal the open top 36 of the removable aerator bottle 30 when the aerator bottle 30 is fully engaged. Aerator bottle interface 40 comprises a gas inlet tube 62 forming part of the gas inlet line 60, the gas inlet tube 62 being configured to extend inside the chamber 32 of the removable aerator bottle 30 when the removable aerator bottle 30 is engaged by the aerator bottle interface 40 and having a gas inlet nozzle 62A for ejecting pressurised gas into liquid contained in chamber 32.

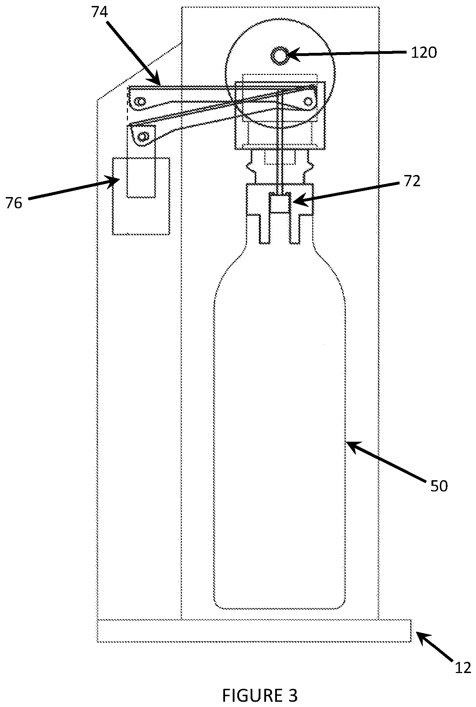

As shown in Figure 3, gas supply mechanism 70 comprises a valve 72 operative to selectively permit gas to flow from gas cylinder 50 and a pivotable valve actuation member 74 driven by a solenoid 76.

In addition to aerator stage 20, aerator device 10 further includes an electronic controller 80 and two optionally activatable stages: an aerated liquid dispenser stage 100; and a flavour dispenser stage 200.

Aerated liquid dispenser stage 100 comprises an aerated liquid dispenser outlet 110 for dispensing aerated liquid into a drinking vessel 150; a liquid outlet line 120 operative to fluidly connect aerator bottle interface 40 to the aerated liquid dispenser outlet 110 to allow aerated liquid to flow from chamber 32 of removable aerator bottle 30 to aerated liquid dispenser outlet 110; and a liquid flow controller 130 for controlling discharge of aerated liquid from removable aerator bottle 30 to aerated liquid dispenser outlet 110 via liquid outlet line 120. Liquid flow controller 130 comprises a liquid flow solenoid valve 132 and a flow regulator 134.

Liquid outlet line 120 comprises a dip tube 122 supported by aerator bottle interface 40 having an opening 122A for receiving aerated liquid positioned at a lowermost part of chamber 32 when removable aerator bottle 30 is engaged by aerator bottle interface 40.

Flavour dispenser stage 200 comprises: a flavouring liquid dispenser 210 comprising a flavouring liquid dispenser outlet 212 and a flavour dispenser mechanism 214; a gas outlet line 220 operative to supply gas from the headspace of the removable aerator bottle 30 to flavouring liquid dispenser 210, the gas outlet line 220 including a gas outlet 222 provided in the aerator bottle interface 40; a gas outlet solenoid valve 230 for controlling discharge of gas from the removable aerator bottle 30 to the flavour dispenser mechanism 214 via the gas outlet line 220; and a pressure control stage 240 fluidly coupled to gas outlet line 220 between gas outlet 222 and gas outlet solenoid valve 230.

Flavouring liquid dispenser outlet 212 is positioned adjacent aerated liquid dispenser outlet 110 to allow both flavouring liquid and aerated liquid to be dispensed simultaneously into drinking vessel 150, with flavouring liquid dispenser outlet 212 and aerated liquid dispenser outlet 110 being positioned to perform in-air mixing of the flavouring liquid and aerated liquid within drinking vessel 150. In this way, the need to clean flavouring liquid from the apparatus after dispensing the flavouring liquid is minimised.

Flavour dispenser mechanism 214 comprises a flavour capsule receptacle 216 for receiving a single-use flavour capsule 300 and a pressure-driven piston 218. Piston 218 is activated via gas outlet line 220 by gas pressure from gas pressure developed in the head of chamber 32 of the removable aeration bottle 30 during the aeration process and acts as a syrup pump.

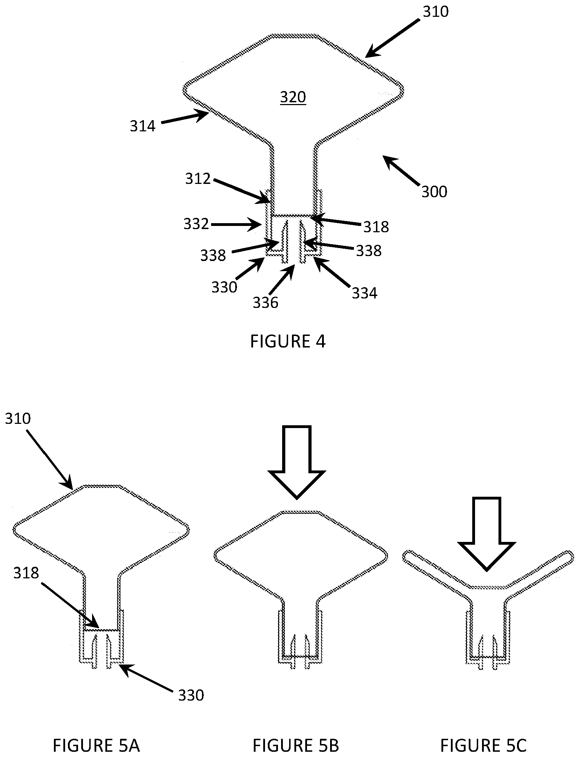

As illustrated in Figure 4, flavour capsule 300 comprises: a sealed collapsible container 310 containing a flavouring syrup 320; and a cap 330 defining a container receiving portion 332 for slidably receiving a leading end 312 of the collapsible container 310, and a base portion 334 defining a central outlet 336 for dispensing the flavouring syrup 320 and at least one piercing element 338 extending from the base portion 334 and extending circumferentially around the central outlet 336.

Collapsible container 310 comprises a flexible pouch part 314 defining a chamber 316 for receiving flavouring syrup 320 and a burstable membrane portion 318 sealing an opening to the chamber, the burstable membrane portion 318 being located at the leading end 312 of the collapsible container.

The at least one piercing element 338 may comprises a plurality of elements circumferentially spaced around central outlet 336 or a substantially annular cutting edge substantially enclosing central outlet 336.

Pressure control stage 240 comprises an exhaust solenoid valve 242 operable to release gas pressure in the chamber 32 to atmosphere, a pressure switch 244 and safety features in the form of a graphite bursting disc 246 and a mechanical pressure-release valve 248.

Electronic controller 80 is responsive to a user input to control operation of each of gas supply mechanism solenoid 76; liquid flow solenoid valve 132; gas outlet valve solenoid 230; and exhaust solenoid valve 242. Pressure switch 244 is used to monitor pressure in chamber 32 and instruct the system to shut off gas supply mechanism solenoid 76 when an appropriate carbonisation pressure is reached in the chamber.

In use, aerated liquid may be dispensed from aerator device 10 in two distinct ways: the user may either detach the removable aerator bottle 30 from aerator bottle interface 40 and dispense the aerated liquid from the removable aerator bottle 30 (e.g. if no flavouring is to be added or if flavouring from a bottle of flavouring liquid is desired) or they may maintain the sealed connection of the removable aerator bottle 30 to the aerator bottle interface 40 and activate controller to dispense the aerated liquid from the aerated liquid dispenser outlet 80 either with or without flavouring.

If dispensing from the aerated liquid dispenser outlet is selected, electronic controller 80 opens liquid flow solenoid valve 132 to allow transfer of aerated liquid from removable aerator bottle 30 to aerated liquid dispenser outlet 80 via liquid outlet line 120 using gas pressure developed in the head of the sealed chamber 32 during the aeration process. Flow regular 104 maintains a substantially constant volumetric flow of aerated liquid from liquid dispenser outlet 80 as aerated liquid is discharged from removable aerator bottle 30 to the aerated liquid dispenser outlet 80. The discharge of aerated liquid from chamber 32 will continue until there is insufficient head pressure to continue. With a headspace pressure typically in the range of 6 to 10 bar there should be more than sufficient pressure in the headspace to substantially empty removable aerator bottle 30.

If flavouring is selected, electronic controller 80 additionally opens gas outlet solenoid valve in parallel to liquid flow solenoid valve 132 to allow transfer of pressurised gas from the headspace of chamber 32 of removable aerator bottle 30 to flavour dispenser mechanism 214 via gas outlet line 220. The pressurised gas causes drives piston 218 of flavour dispenser mechanism 214 to towards the installed flavour capsule 300 urging leading end 312 of collapsible container 310 towards base portion 334 of cap 330 and thereby causing the at least one piercing element 338 to rupture the burstable membrane portion 318 of collapsible container 310 to allow the flavouring syrup 320 to flow from the collapsible bag 310 to central outlet 336 (Figures 5A and 5B). Once the burstable membrane portion 318 is ruptured, gas pressure continues to drive piston 218 forward to substantially collapse collapsible container 310 and thereby drive substantially all of the flavouring syrup 320 from the flavour capsule 300 and out of flavouring liquid dispenser outlet 212 (Figure 5C). In this way a metered dose (precise measurement of syrup to aerated liquid) may be added with flavour dispenser mechanism 214 being operated using gas pressure that would be discarded in a conventional domestic carbonator device.

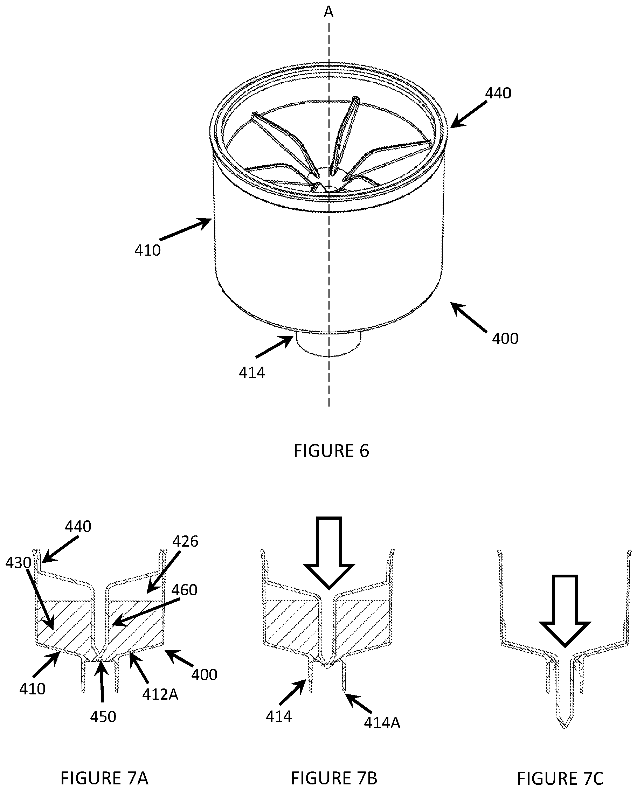

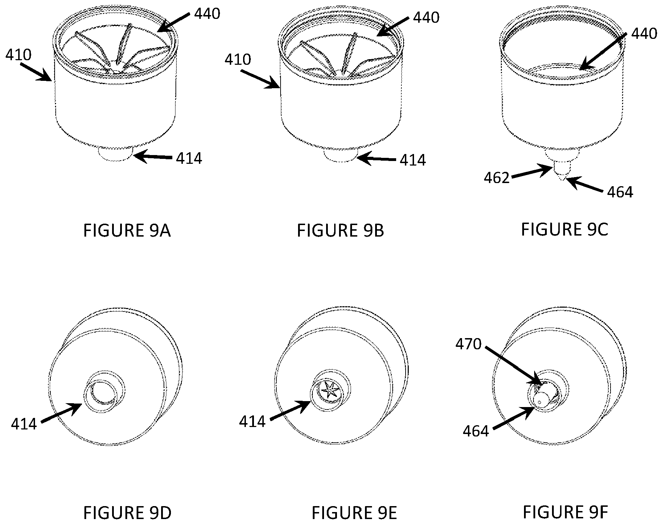

Figures 6-11 illustrate an alternative embodiment of a flavour capsule 400 for use in aerator device 10.

Flavour capsule 400 comprises a two-part construction including a substantially rigid container 410 defining a chamber 420 containing a flavouring syrup 430; and a plunger 440 slidably mounted within and sealing the chamber 420 of the container. Container 410 comprises a proximal end 410A at which an opening 422 to chamber 420 is located and a distal end 410B forming a base 412 with a cylindrical outlet nozzle 414. An air space 426 is provided in the chamber above the flavouring syrup 430 to permit movement of plunger from the first position to the second position substantially without requiring any compression of the flavouring syrup.

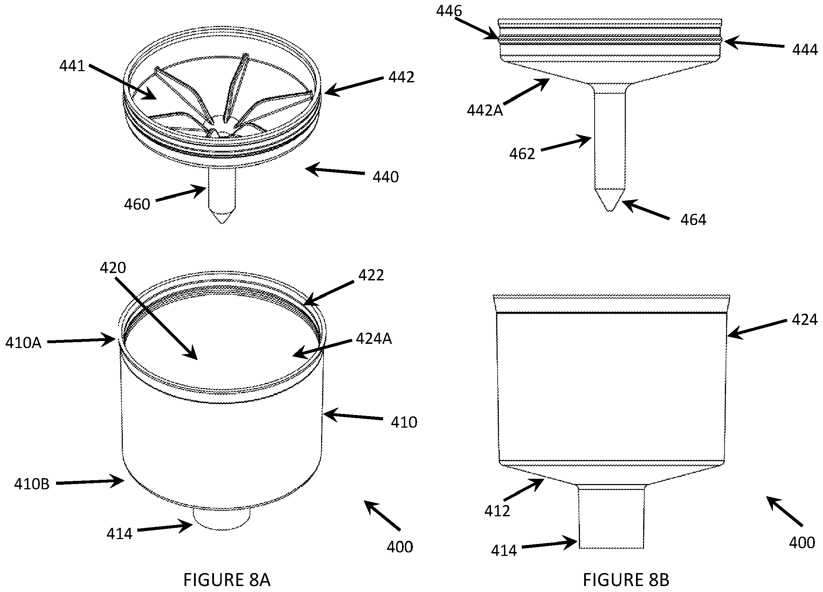

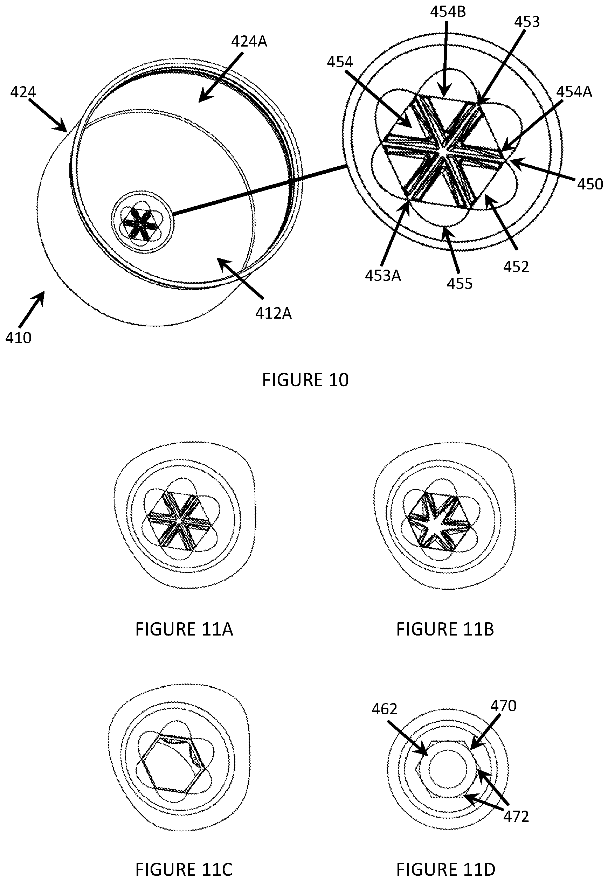

As illustrated in Figures 8A-8B and 10, container 410 and plunger 440 have interengageable parts comprising a central frangible seal portion 450 provided on the base 412 of container 410 immediately above outlet nozzle 414 and a central puncturing element 460 provided on plunger 440. The frangible seal portion 450 is configured to form, when ruptured by the puncturing element 460, a central aperture 470 for dispensing the flavouring syrup.

As shown in figures 8A and 8B, chamber 420 comprises a tapered peripheral chamber wall 424 extending between the base 412 of container 410 and opening 422, peripheral chamber wall 424 having cross-sectional area that decreases with increased distance from opening 422.

Plunger 440 comprises a head portion 442 comprising an upper surface 441 configured to be engaged by piston 218 and a peripheral sealing surface 444 configured to seal against an inner peripheral surface 424A of peripheral chamber wall 424, the peripheral sealing surface 444 comprising at least one sealing ring 446 . In view of the taper, the head portion 442 is configured to seal against the inner peripheral surface 424A of the peripheral chamber wall 424 by virtue of deformation of the peripheral chamber wall 424.

As illustrated, the base 412 of container 410 has an inner face 412A with a sloped profile operative to direct flavouring syrup 430 towards the frangible seal portion 450 and the head portion 442 of plunger 440 has a trailing inner face 442A with a corresponding sloped profile whereby in the third position the trailing inner face 442A of the head portion 442 substantially engages the inner face 442A of the base 412 of the container 410.

Puncturing element 460 comprises: a trailing aperture engaging shaft 462 extending from head portion 442 of plunger 440, through flavouring syrup 430 and towards the frangible seal portion 450; and a leading aperture forming spike 464.

As illustrated, leading aperture forming spike 464 has a circular cross-section of gradually increasing diameter.

In accordance with a feature of the present invention, trailing aperture engaging shaft 462 has a first cross-sectional form of cross-sectional area A₁ and frangible seal portion 450 comprises a second cross-sectional form of cross-sectional area A₂ (wherein A₁ < A₂) configured to combine with the first cross-sectional form of the trailing aperture engaging shaft 462 in order to create a predetermined flow gap configuration.

In the illustrated example, the first cross-sectional form is a constant diameter circular cross-sectional form and the second cross-sectional form is an n-sided (in this example, hexagonal) outer polygonal form. In this way, the first and second cross-sectional forms combine to create a predetermined configuration of *n* substantially equally circumferentially spaced flow gaps 472 around the trailing aperture engaging shaft 462 when it is fully engaged in the formed aperture 470, one flow gap at each apex of the n-sided polygon. This controls the flow of the fluid out of the chamber 420. An alternative design could incorporate a polygonal cross-section shaft engaging circular hole or variations of both. In an alternative design, the frangible surface may not be a polygon but could be any shape that combines with the shape of the trailing aperture engaging shaft to form a suitable flow gap (e.g. plurality of flow gaps).

With reference to Figures 10 and 11A-D, frangible seal portion 450 defines a displaceable flap profile 452 comprising a plurality of *n* substantially equal length and equally circumferentially spaced lines of weakness 453 each formed by a rupturable thin wall section of plastics material and extending radially from the central axis "A" to an end region 453A. The *n* lines of weakness 453 divide the frangible seal portion 450 into a plurality of *n* circumferentially spaced radially extending displaceable triangular flap portions 454 each formed by a bendable thin wall section of plastics material and separated by the lines of weakness 453. In an alternative design, the displaceable flap profile may be an additional component or a two-shot moulding incorporating two different materials.

Each of the plurality of *n* displaceable triangular flaps 454 has reinforced edges 454A extending along the lines of weakness 453 to encourage the flaps to maintain their shape as the lines of weakness are broken by the puncturing action of the puncturing element 460 and a reinforced hinge edge 454B formed by a reinforced region of material 455 adjacent each hinge edge.

When ruptured by the leading aperture forming spike 464 (Figures 11A-11D), displaceable triangular flap portions 454 will fold outwards creating triangular petals and six small flow gaps 472.

In use, during an initial puncturing step plunger 440 is movable relative to the container 410 (e.g. by drive piston 218 actuated by CO₂ pressure driving against upper surface 441) from a first position (Figure 7A) to a second position (Figure 7B), wherein movement of the plunger 440 relative to the container 410 from the first position to the second position causes puncturing element 460 to puncture the frangible seal portion 450 to form an aperture 470 for dispensing flavouring syrup 430 from chamber 420.

Once the frangible seal portion 450 is punctured, plunger 460 is further movable relative to the container 410 during a discharging step to a third position (Figure 7C), wherein movement of the plunger 460 relative to the container 410 from the second position to the third position urges the flavouring syrup 430 to flow out of the chamber 420 and through the aperture 470.

In the third position, puncturing element 460 extends substantially along a full length of the outlet nozzle 414 to create a central flavouring flow guide element. As illustrated, the leading part of the puncturing element (e.g. spike 464 of the puncturing element and a leading part of the trailing aperture engaging part 462) protrudes beyond an outlet opening 414A of the outlet nozzle 414.

Both parts 410 and 440 of flavour capsule 400 (and relevant parts of the aerator device 10) may designed to be made from a range of thermoplastic polymers as well as bio-materials, bio-degradable and compostable materials.

The flavouring syrup flow down the side of puncturing element 460 and returns to one stream of fluid as it leaves the tip.

In an alternative design, the spike may not return the individual jet to one stream such that multiple jets of fluid are generated.

Once the frangible seal portion 450 is ruptured, gas pressure continues to drive piston 218 forward to drive substantially all of the flavouring syrup 430 from the flavour capsule 400 and out of outlet nozzle 414.

In one embodiment, flavour capsules 300, 400 may comprise a barcode and the electronic controller is operative to select a degree of aeration required based on the barcode (e.g. using a barcode reader module) to provide an even more enhanced dosage of flavouring.

As will be appreciated, portable domestic aerator device 10 provides significant enhancements and flexibility over a conventional domestic carbonator device whilst being substantially powered by gas pressure available in the headspace of a conventional domestic carbonator device. In this way, the enhancement and increased flexibility are provided with minimal additional complexity and cost the aerator device.

## Claims

1. Apparatus (10) for the preparation of aerated drinks, comprising:
an aerator stage (20) comprising:
a removable aerator bottle (30) defining a chamber (32) for receiving a liquid to be aerated;
an aerator bottle interface (40) operative to engage the removable aerator bottle (30) and seal the chamber (32) thereof;
a gas inlet line (60) operative to fluidly connect a gas source (50) to the aerator bottle interface (40); and
a gas supply mechanism (70) for controlling supply of gas from the gas source (50) to the aerator bottle interface (40) via the gas inlet line (60);
an aerated liquid dispenser outlet (110);
a liquid outlet line (120) operative to fluidly connect the aerator bottle interface (40) to the aerated liquid dispenser outlet (110) to allow aerated liquid to flow from the chamber (32) of the removable aerator bottle (30) to the aerated liquid dispenser outlet (110); and
a liquid flow controller (130) for controlling discharge of aerated liquid from the removable aerator bottle (30) to the aerated liquid dispenser outlet (110) via the liquid outlet line (120);
**characterised in that**:
the apparatus (10) further comprises a flavouring liquid dispenser (210) comprising a flavouring liquid dispenser outlet (212); and
**in that** the flavouring liquid dispenser (210) comprises a flavour dispenser mechanism (214) that is activated by gas pressure from the removable aerator bottle (30).

2. Apparatus (10) according to claim 1, wherein the apparatus (10) is configured to transfer aerated liquid from the removable aerator bottle (30) to the aerated liquid dispenser outlet (110) using gas pressure in the sealed chamber (32).

3. Apparatus (10) according to claim 1 or claim 2, wherein the liquid flow controller (130) comprises a valve (132) and a flow regulator (134) operative to maintain a substantially constant flow rate of aerated liquid from the aerated liquid dispenser outlet (110) as aerated liquid is discharged from the removable aerator bottle (30) to the aerated liquid dispenser outlet (110).

4. Apparatus (10) according to any of the preceding claims, wherein the liquid outlet line (120) comprises a dip tube (122) having an opening (122A) for receiving aerated liquid positioned at a lower part of the chamber (32) when the removable aerator bottle (30) is engaged by the aerator bottle interface (40).

5. Apparatus (10) according to any of the preceding claims, wherein the flavouring liquid dispenser outlet (212) is positioned adjacent the aerated liquid dispenser outlet (110).

6. Apparatus (10) according to claim 5, wherein the flavouring liquid dispenser outlet (212) and aerated liquid dispenser outlet (110) are configured to perform in-air mixing outside of the apparatus.

7. Apparatus (10) according to any of the preceding claims, wherein the flavouring liquid dispenser (210) is configured to dispense flavouring liquid from a flavour capsule (300)(400) received in the flavouring liquid dispenser (210).

8. Apparatus (10) according to claim 7, wherein the flavour dispenser mechanism (214) is operative to perform one or more of the following functions: open a flavour capsule (300)(400) received in the flavouring liquid dispenser (210); drive the flavouring liquid out from the opened flavour capsule (300)(400) towards the flavouring liquid dispenser outlet (212).

9. Apparatus (10) according to claim 8, wherein the flavour dispenser mechanism (214) comprises a capsule opening mechanism (218) operative to apply a dispensing force to a flavour capsule (300)(400) received in the flavouring liquid dispenser (210), the capsule opening mechanism (218) being driven by gas pressure from the aerator stage (20).

10. Apparatus (10) according to any of claims 7-9, wherein:
the apparatus (10) further comprises an electronic controller (80) operative to control operation of the gas supply mechanism (70); and
the flavour capsule (300)(400) comprises a machine-readable identifier;
wherein the apparatus (10) is operative to read the machine-readable identifier and electronic controller (80) is operative to select a degree of aeration required based on the machine-readable identifier.

11. A method of preparing an aerated liquid using an aerator device (10), the method comprising:
filling a chamber (32) of a removable aerator bottle (30) with liquid;
attaching the removable aerator bottle (30) to an aerator bottle interface (40) of the aerator device (10) and sealing the chamber (32);
aerating the liquid in the chamber (32) of the removable aerator bottle (30) by transferring pressurised gas to the chamber (32); and
subsequently transferring aerated liquid from the chamber (32) of the removable aerator bottle (30) to a receptacle (150) via an aerated liquid dispenser outlet (110) connected to the aerator bottle interface (40) by a liquid outlet line (120);
**characterised in that**:
the method further comprises dispensing a flavouring liquid from a flavouring liquid dispenser (210) into the receptacle (150), the flavouring liquid dispenser (210) comprising a flavour dispenser mechanism (214);
and **in that** the step of dispensing the flavouring liquid from the flavouring liquid dispenser (210) comprises activating the flavour dispenser mechanism (214) using gas pressure from the removable aerator bottle (30).

12. A method according to claim 11, wherein the step of transferring aerated liquid from the chamber (32) of the removable aerator bottle (30) to the receptacle is achieved substantially using gas pressure developed in a head of the chamber (32) during the aeration step to discharge aerated liquid from the chamber (32) of the removable aerator bottle (30).

13. A method according to claim 11 or claim 12, wherein the flavouring liquid dispenser (210) has a flavouring liquid dispenser outlet (212) positioned adjacent the aerated liquid dispenser outlet (110).

14. A method according to claim 13, wherein the method further comprises substantially simultaneously dispensing flavouring liquid and aerated liquid into the receptacle (150) to achieve in-air mixing of the flavouring liquid and aerated liquid.

15. A method according to any of claims 11-14, wherein the step of dispensing a flavouring liquid from the flavouring liquid dispenser (210) comprises inserting a flavour capsule (300)(400) into the flavouring liquid dispenser (210) and the pressurised gas supplied to the flavouring liquid dispenser (210) drives a capsule opening mechanism (218) to apply a dispensing force to the flavour capsule (300)(400) received in the flavouring liquid dispenser (210).

## Patentansprüche

1. Vorrichtung (10) zur Herstellung von kohlensäurehaltigen Getränken, umfassend:
eine Kohlensäurestufe (20), umfassend:
eine entfernbare Kohlensäureflasche (30), die eine Kammer (32) zum Aufnehmen einer mit Kohlensäure zu versehenden Flüssigkeit definiert;
eine Kohlensäureflaschenschnittstelle (40), die dazu dient, die entfernbare Kohlensäureflasche (30) in Eingriff zu nehmen und die Kammer (32) davon abzudichten;
eine Gaseinlassleitung (60), die dazu dient, eine Gasquelle (50) fluidisch mit der Kohlensäureflaschenschnittstelle (40) zu verbinden; und
einen Gaszufuhrmechanismus (70) zum Steuern von Zufuhr von Gas von der Gasquelle (50) zu der Kohlensäureflaschenschnittstelle (40) über die Gaseinlassleitung (60);
einen Spenderauslass für kohlensäurehaltige Flüssigkeit (110);
eine Flüssigkeitsauslassleitung (120), die dazu dient, die Kohlensäureflaschenschnittstelle (40) fluidisch mit dem Spenderauslass für kohlensäurehaltige Flüssigkeit (110) zu verbinden, um zu ermöglichen, dass kohlensäurehaltige Flüssigkeit aus der Kammer (32) der entfernbaren Kohlensäureflasche (30) zu dem Spenderauslass für kohlensäurehaltige Flüssigkeit (110) fließt; und
eine Flüssigkeitsflusssteuerung (130) zum Steuern von Abgabe von kohlensäurehaltiger Flüssigkeit aus der entfernbaren Kohlensäureflasche (30) an den Spenderauslass für kohlensäurehaltige Flüssigkeit (110) über die Flüssigkeitsauslassleitung (120);
**dadurch gekennzeichnet, dass**:
die Vorrichtung (10) ferner einen Geschmacksflüssigkeitsspender (210) umfasst, der einen Geschmacksflüssigkeitsspenderauslass (212) umfasst; und
dass der Geschmacksflüssigkeitsspender (210) einen Geschmacksspendermechanismus (214) umfasst, der durch Gasdruck aus der entfernbaren Kohlensäureflasche (30) aktiviert wird.

2. Vorrichtung (10) nach Anspruch 1, wobei die Vorrichtung (10) konfiguriert ist, um kohlensäurehaltige Flüssigkeit aus der entfernbaren Kohlensäureflasche (30) zu dem Spenderauslass für kohlensäurehaltige Flüssigkeit (110) unter Verwendung von Gasdruck in der abgedichteten Kammer (32) zu übertragen.

3. Vorrichtung (10) nach Anspruch 1 oder Anspruch 2, wobei die Flüssigkeitsflusssteuerung (130) ein Ventil (132) und einen Flussregler (134) umfasst, die dazu dienen, eine im Wesentlichen konstante Flussrate an kohlensäurehaltiger Flüssigkeit aus dem Spenderauslass für kohlensäurehaltige Flüssigkeit (110) aufrechtzuerhalten, während kohlensäurehaltige Flüssigkeit aus der entfernbaren Kohlensäureflasche (30) an den Spenderauslass für kohlensäurehaltige Flüssigkeit (110) abgegeben wird.

4. Vorrichtung (10) nach einem der vorhergehenden Ansprüche, wobei die Flüssigkeitsauslassleitung (120) ein Tauchrohr (122) mit einer Öffnung (122A) zum Aufnehmen von kohlensäurehaltiger Flüssigkeit umfasst, die in einem unteren Teil der Kammer (32) positioniert ist, wenn die entfernbare Kohlensäureflasche (30) durch die Kohlensäureflaschenschnittstelle (40) in Eingriff genommen ist.

5. Vorrichtung (10) nach einem der vorhergehenden Ansprüche, wobei der Geschmacksflüssigkeitsspenderauslass (212) benachbart zu dem Spenderauslass für kohlensäurehaltige Flüssigkeit (110) positioniert ist.

6. Vorrichtung (10) nach Anspruch 5, wobei der Geschmacksflüssigkeitsspenderauslass (212) und der Spenderauslass für kohlensäurehaltige Flüssigkeit (110) konfiguriert sind, um Mischung an Luft außerhalb der Vorrichtung durchzuführen.

7. Vorrichtung (10) nach einem der vorhergehenden Ansprüche, wobei der Geschmacksflüssigkeitsspender (210) konfiguriert ist, um Geschmacksflüssigkeit aus einer Geschmackskapsel (300)(400) auszugeben, die in dem Geschmacksflüssigkeitsspender (210) aufgenommen ist.

8. Vorrichtung (10) nach Anspruch 7, wobei der Geschmacksspendermechanismus (214) dazu dient, eine oder mehrere der folgenden Funktionen durchzuführen: Öffnen einer Geschmackskapsel (300)(400), die in dem Geschmacksflüssigkeitsspender (210) aufgenommen ist; Treiben der Geschmacksflüssigkeit aus der geöffneten Geschmackskapsel (300)(400) zu dem Geschmacksflüssigkeitsspenderauslass (212).

9. Vorrichtung (10) nach Anspruch 8, wobei der Geschmacksspendermechanismus (214) einen Kapselöffnungsmechanismus (218) umfasst, der dazu dient, eine Ausgabekraft auf eine Geschmackskapsel (300)(400) auszuüben, die in dem Geschmacksflüssigkeitsspender (210) aufgenommen wird, wobei der Kapselöffnungsmechanismus (218) durch Gasdruck aus der Kohlensäurestufe (20) getrieben wird.

10. Vorrichtung (10) nach einem der Ansprüche 7-9, wobei:
die Vorrichtung (10) ferner eine elektronische Steuerung (80) umfasst, die dazu dient, Betrieb des Gaszufuhrmechanismus (70) zu steuern; und
die Geschmackskapsel (300)(400) eine maschinenlesbare Kennung umfasst;
wobei die Vorrichtung (10) dazu dient, die maschinenlesbare Kennung zu lesen, und die elektronische Steuerung (80) dazu dient, einen erforderlichen Kohlensäuregrad basierend auf der maschinenlesbaren Kennung auszuwählen.

11. Verfahren zur Herstellung einer kohlensäurehaltigen Flüssigkeit unter Verwendung eines Kohlensäuregeräts (10), wobei das Verfahren Folgendes umfasst:
Füllen einer Kammer (32) einer entfernbaren Kohlensäureflasche (30) mit Flüssigkeit;
Anbringen der entfernbaren Kohlensäureflasche (30) an einer Kohlensäureflaschenschnittstelle (40) des Kohlensäuregeräts (10) und Abdichten der Kammer (32);
Versehen der Flüssigkeit in der Kammer (32) der entfernbaren Kohlensäureflasche (30) mit Kohlensäure durch Übertragen von Druckgas in die Kammer (32); und
anschließend Übertragen von kohlensäurehaltiger Flüssigkeit aus der Kammer (32) der entfernbaren Kohlensäureflasche (30) in einen Behälter (150) über einen Spenderauslass für kohlensäurehaltige Flüssigkeit (110), der mit der Kohlensäureflaschenschnittstelle (40) durch eine Flüssigkeitsauslassleitung (120) verbunden ist;
**dadurch gekennzeichnet, dass**:
das Verfahren ferner Ausgeben einer Geschmacksflüssigkeit aus einem Geschmacksflüssigkeitsspender (210) in den Behälter (150) umfasst, wobei der Geschmacksflüssigkeitsspender (210) einen Geschmacksspendermechanismus (214) umfasst;
und dass der Schritt des Ausgebens der Geschmacksflüssigkeit aus dem Geschmacksflüssigkeitsspender (210) Aktivieren des Geschmacksspendermechanismus (214) unter Verwendung von Gasdruck aus der entfernbaren Kohlensäureflasche (30) umfasst.

12. Verfahren nach Anspruch 11, wobei der Schritt des Übertragens von kohlensäurehaltiger Flüssigkeit aus der Kammer (32) der entfernbaren Kohlensäureflasche (30) in den Behälter im Wesentlichen unter Verwendung von Gasdruck erreicht wird, der in einem Kopf der Kammer (32) während des Schrittes des Versehens mit Kohlensäure entwickelt wird, um kohlensäurehaltige Flüssigkeit aus der Kammer (32) der entfernbaren Kohlensäureflasche (30) abzugeben.

13. Verfahren nach Anspruch 11 oder Anspruch 12, wobei der Geschmacksflüssigkeitsspender (210) einen Geschmacksflüssigkeitsspenderauslass (212) aufweist, der benachbart zu dem Spenderauslass für kohlensäurehaltige Flüssigkeit (110) positioniert ist.

14. Verfahren nach Anspruch 13, wobei das Verfahren ferner im Wesentlichen gleichzeitiges Ausgeben von Geschmacksflüssigkeit und kohlensäurehaltiger Flüssigkeit in den Behälter (150) umfasst, um Mischung der Geschmacksflüssigkeit und der kohlensäurehaltigen Flüssigkeit in Luft zu erreichen.

15. Verfahren nach einem der Ansprüche 11-14, wobei der Schritt des Ausgebens einer Geschmacksflüssigkeit aus dem Geschmacksflüssigkeitsspender (210) Einsetzen einer Geschmackskapsel (300)(400) in den Geschmacksflüssigkeitsspender (210) umfasst und das Druckgas, das dem Geschmacksflüssigkeitsspender (210) zugeführt wird, einen Kapselöffnungsmechanismus (218) antreibt, um eine Ausgabekraft auf die Geschmackskapsel (300)(400) auszuüben, die in dem Geschmacksflüssigkeitsspender (210) aufgenommen ist.

## Revendications

1. Appareil (10) de préparation de boissons gazeuses, comprenant :
un étage gazéificateur (20) comprenant :
un flacon gazéificateur amovible (30) définissant une chambre (32) destinée à recevoir un liquide à gazéifier ;
une interface de flacon gazéificateur (40) fonctionnelle pour mettre en prise le flacon gazéificateur amovible (30) et étanchéifier la chambre (32) de celui-ci ;
une conduite d'admission de gaz (60) fonctionnelle pour relier de manière fluidique une source de gaz (50) à l'interface de flacon gazéificateur (40) ; et
un mécanisme d'alimentation en gaz (70) pour réguler l'alimentation en gaz depuis la source de gaz (50) à l'interface de flacon gazéificateur (40) via la conduite d'admission de gaz (60) ;
une sortie de distributeur de liquide gazéifié (110) ;
une conduite de sortie de liquide (120) fonctionnelle pour relier de manière fluidique l'interface de flacon gazéificateur (40) à la sortie du distributeur de liquide gazéifié (110) pour permettre au liquide gazéifié de s'écouler depuis la chambre (32) du flacon gazéificateur amovible (30) à la sortie du distributeur de liquide gazéifié (110) ; et
un régulateur d'écoulement de liquide (130) pour réguler l'évacuation du liquide gazéifié depuis le flacon gazéificateur amovible (30) vers la sortie du distributeur de liquide gazéifié (110) via la conduite de sortie de liquide (120) ;
**caractérisé en ce que** :
l'appareil (10) comprend en outre un distributeur de liquide aromatisant (210) comprenant une sortie de distributeur de liquide aromatisant (212) ; et
**en ce que** le distributeur de liquide aromatisant (210) comprend un mécanisme distributeur d'arôme (214) qui est activé par la pression de gaz provenant du flacon gazéificateur amovible (30).

2. Appareil (10) selon la revendication 1, dans lequel l'appareil (10) est configuré pour transférer du liquide gazéifié depuis le flacon gazéificateur amovible (30) vers la sortie du distributeur de liquide gazéifié (110) en utilisant la pression de gaz dans la chambre étanchéifiée (32).

3. Appareil (10) selon la revendication 1 ou la revendication 2, dans lequel le régulateur d'écoulement de liquide (130) comprend une vanne (132) et un régulateur d'écoulement (134) fonctionnels pour maintenir un débit sensiblement constant de liquide gazéifié depuis la sortie du distributeur de liquide gazéifié (110) lorsque le liquide gazéifié est évacué depuis le flacon gazéificateur amovible (30) vers la sortie du distributeur de liquide gazéifié (110).

4. Appareil (10) selon l'une quelconque des revendications précédentes, dans lequel la conduite de sortie de liquide (120) comprend un tube plongeur (122) ayant une ouverture (122A) pour recevoir du liquide gazéifié, positionnée au niveau d'une partie inférieure de la chambre (32) lorsque le flacon gazéificateur amovible (30) est mis en prise par l'interface de flacon gazéificateur (40).

5. Appareil (10) selon l'une quelconque des revendications précédentes, dans lequel la sortie du distributeur de liquide aromatisant (212) est positionnée adjacente à la sortie du distributeur de liquide gazéifié (110).

6. Appareil (10) selon la revendication 5, dans lequel la sortie du distributeur de liquide aromatisant (212) et la sortie du distributeur de liquide gazéifié (110) sont configurées pour effectuer un mélange en-air à l'extérieur de l'appareil.

7. Appareil (10) selon l'une quelconque des revendications précédentes, dans lequel le distributeur de liquide aromatisant (210) est configuré pour distribuer du liquide aromatisant à partir d'une capsule aromatique (300)(400) reçue dans le distributeur de liquide aromatisant (210).

8. Appareil (10) selon la revendication 7, dans lequel le mécanisme distributeur d'arôme (214) est fonctionnel pour exécuter une ou plusieurs des fonctions suivantes : ouvrir une capsule aromatique (300)(400) reçue dans le distributeur de liquide aromatisant (210) ; entraîner le liquide aromatisant en dehors de la capsule aromatique ouverte (300)(400) vers la sortie du distributeur de liquide aromatisant (212).

9. Appareil (10) selon la revendication 8, dans lequel le mécanisme distributeur d'arôme (214) comprend un mécanisme d'ouverture de capsule (218) fonctionnel pour appliquer une force de distribution à une capsule aromatique (300)(400) reçue dans le distributeur de liquide aromatisant (210), le mécanisme d'ouverture de capsule (218) étant entraîné par la pression de gaz provenant de l'étage gazéificateur (20).

10. Appareil (10) selon l'une quelconque des revendications 7 à 9, dans lequel :
l'appareil (10) comprend en outre un contrôleur électronique (80) fonctionnel pour commander le fonctionnement du mécanisme d'alimentation en gaz (70) ; et
la capsule aromatique (300)(400) comprend un identifiant lisible par machine ;
dans lequel l'appareil (10) est fonctionnel pour lire l'identifiant lisible par machine et le contrôleur électronique (80) est fonctionnel pour sélectionner un degré de gazéification requis sur la base de l'identifiant lisible par machine.

11. Procédé de préparation d'un liquide gazéifié à l'aide d'un dispositif gazéificateur (10), le procédé comprenant :
le remplissage d'une chambre (32) d'un flacon gazéificateur amovible (30) avec du liquide ;
la fixation du flacon gazéificateur amovible (30) à une interface de flacon gazéificateur (40) du dispositif gazéificateur (10) et l'étanchéification de la chambre (32) ;
la gazéification du liquide dans la chambre (32) du flacon gazéificateur amovible (30) en transférant du gaz sous pression dans la chambre (32) ; et
le transfert ultérieur du liquide gazéifié depuis la chambre (32) du flacon gazéificateur amovible (30) vers un récipient (150) via une sortie de distributeur de liquide gazéifié (110) reliée à l'interface de flacon gazéificateur (40) par une conduite de sortie de liquide (120) ;
**caractérisé en ce que** :
le procédé comprend en outre la distribution d'un liquide aromatisant à partir d'un distributeur de liquide aromatisant (210) dans le récipient (150), le distributeur de liquide aromatisant (210) comprenant un mécanisme distributeur d'arôme (214) ;
et **en ce que** l'étape de distribution du liquide aromatisant à partir du distributeur de liquide aromatisant (210) comprend l'activation du mécanisme distributeur d'arôme (214) à l'aide de la pression de gaz provenant du flacon gazéificateur amovible (30).

12. Procédé selon la revendication 11, dans lequel l'étape de transfert de liquide gazéifié depuis la chambre (32) du flacon gazéificateur amovible (30) vers le récipient est réalisée essentiellement en utilisant la pression de gaz développée dans une tête de la chambre (32) pendant l'étape de gazéification pour évacuer le liquide gazéifié depuis la chambre (32) du flacon gazéificateur amovible (30).

13. Procédé selon la revendication 11 ou la revendication 12, dans lequel le distributeur de liquide aromatisant (210) comporte une sortie de distributeur de liquide aromatisant (212) positionnée adjacente à la sortie de distributeur de liquide gazéifié (110).

14. Procédé selon la revendication 13, dans lequel le procédé comprend en outre la distribution sensiblement simultanée de liquide aromatisant et de liquide gazéifié dans le récipient (150) pour obtenir un mélange en-air du liquide aromatisant et du liquide gazéifié.

15. Procédé selon l'une quelconque des revendications 11 à 14, dans lequel l'étape de distribution d'un liquide aromatisant à partir du distributeur de liquide aromatisant (210) comprend l'insertion d'une capsule aromatique (300)(400) dans le distributeur de liquide aromatisant (210) et le gaz sous pression fourni au distributeur de liquide aromatisant (210) entraîne un mécanisme d'ouverture de capsule (218) pour appliquer une force de distribution à la capsule aromatique (300)(400) reçue dans le distributeur de liquide aromatisant (210).
